# FASCICULE DE BREVET EUROPEEN

(11) **EP 2 080 873 B1**
(45) Date de publication et mention de la délivrance du brevet: **20.03.2013**
(21) Numéro de dépôt: 09150316.9
(22) Date de dépôt: 09.01.2009
(51) Int. Cl.: F01N 3/20

(54) **Procédé d'injection d'agent réducteur dans une ligne d'échappement**
Verfahren zum Einspritzen eines Reduktionsmittels in eine Abgasleitung
Method for injecting a reducing agent in an exhaust line

(30) Priorité: 18.01.2008 FR 0850298
(43) Date de publication de la demande: 22.07.2009
(73) Titulaire: Peugeot Citroën Automobiles SA, 78140 Vélizy-Villacoublay (FR)
(72) Inventeur: Maesse, Pierre-Henri, 92500, Rueil Malmaison (FR); Lesueur, Jean-Nicolas, 92250, La Garenne Colombes (FR)
(74) Mandataire: Ménès, Catherine

(56) Documents cités:
- EP-A- 0 820 799
- EP-A- 2 000 641
- WO-A-98/55742
- WO-A-2007/145548
- DE-A1-102006 021 089
- US-A- 5 540 047
- US-A1- 2003 051 468
- US-A1- 2003 056 500
- US-A1- 2005 282 285

## Description

La présente invention concerne un procédé d'injection d'agent réducteur dans la ligne d'échappement d'un moteur, plus particulièrement d'un moteur installé dans un véhicule automobile de type Diesel.

Dans un moteur de véhicule de type Diesel, la combustion du carburant a pour conséquence la création de gaz tels que le monoxyde d'azote (NO), le dioxyde d'azote (NO2) ou encore l'oxyde de diazote (N20).

Ces gaz, connus de manière générale sous le nom d'oxydes d'azote (NOx) présentent un danger, d'une part pour la santé des êtres humains, et d'autre part pour l'environnement puisqu'ils contribuent à la formation de brouillard de pollution dans les villes, et au réchauffement de la planète en augmentant l'effet de serre. En conséquence, il est nécessaire de prévoir des solutions pour détruire ces gaz, avant qu'ils ne soient émis dans l'atmosphère. Le traitement de ces gaz dans les véhicules est d'ailleurs sévèrement règlementé par différentes normes.

Pour détruire chimiquement ces oxydes d'azote avant leur échappement dans l'atmosphère, il est connu d'effectuer une réduction de type réduction catalytique sélective, dite SCR. A cet effet, il est possible d'utiliser différents agents réducteurs, parmi lesquels les plus efficaces sont les agents contenant de l'ammoniac, ou se transformant en ammoniac au cours d'une réaction chimique.

Ainsi, dans un processus de traitement des oxydes d'azote utilisant un agent réducteur contenant de l'ammoniac, on assiste tout d'abord à une décomposition de cet agent en ammoniac, suivi d'une réduction des oxydes d'azote par cet ammoniac, effectuée dans un catalyseur spécifique, dit catalyseur SCR.

L'ammoniac réagit, dans le catalyseur SCR, avec les oxydes d'azote issus du moteur. En fonction de la composition du flux d'échappement, une ou plusieurs des réactions suivantes peuvent avoir lieu dans le catalyseur :
- une réaction, dite standard SCR, de réduction des monoxydes d'azote : 4NH₃+4NO+O₂->4N₂+6H₂O,
- une réaction, dite « fast SCR », de réduction des monoxydes d'azote et des dioxydes d'azote : 4 NH₃ + 2 NO + 2 NO₂ -> 4 N₂ + 6 H₂O. Cette réaction est, certes, plus rapide que la réaction standard, mais elle nécessite une quantité équivalente en monoxydes d'azote et en dioxydes d'azote.

Au vu de ces équations, il semble qu'un moyen sûr pour éviter tout dégagement d'oxydes d'azotes dans l'atmosphère consisterait à injecter une quantité d'ammoniac supérieure aux quantités stoechiométriques, afin de garantir un accomplissement total des réactions de réduction.

Une telle solution, bien que permettant un traitement correct des oxydes d'azote émis en sortie du moteur, présente l'inconvénient majeur de risquer de provoquer des dégagements d'ammoniac peu souhaitables. En effet, ainsi que mentionné précédemment, l'ammoniac est un gaz irritant, malodorant, voire toxique à certaines concentrations, et il n'est donc pas envisageable qu'un dégagement d'un tel gaz se produise à proximité d'un utilisateur du véhicule, ou de toute autre personne avoisinante.

Il a donc été mis en place, dans la plupart des systèmes de post-traitement à réduction catalytique sélective, des dispositifs permettant de gérer l'injection d'ammoniac, de façon à assurer un compromis correct entre une injection suffisante pour réduire correctement les oxydes d'azote, et une injection limitée afin d'éviter toute fuite d'ammoniac.

On connaît, par exemple de US2003/051468, des dispositifs utilisant un capteur de gaz, situé en sortie du catalyseur, et permettant de mesurer les quantités de gaz émis. Les capteurs choisis sont généralement sensibles à la fois aux oxydes d'azote, appelés NOx, et à l'ammoniac NH3. Un tel capteur sera désigné par l'expression « capteur NOx/NH3 » dans la suite de la description.

Dans ce type de dispositif, le signal de sortie du capteur est transmis à un calculateur électronique chargé de la gestion de l'injection. A partir de ce signal, le calculateur est en mesure de déterminer la quantité de gaz émise en sortie du catalyseur et mesurée par le capteur. Le calculateur compare alors cette quantité avec un modèle prédéterminé, afin de détecter un éventuel écart, et de modifier la consigne d'injection pour réduire cet écart. Toutefois, la seule valeur du signal électrique ne permet pas de déterminer la nature du gaz émis, mais uniquement la quantité. En conséquence, le calculateur se voit dans l'obligation, pour commander une modification de l'injection d'agent réducteur, de faire une supposition quant à la nature du gaz émis.

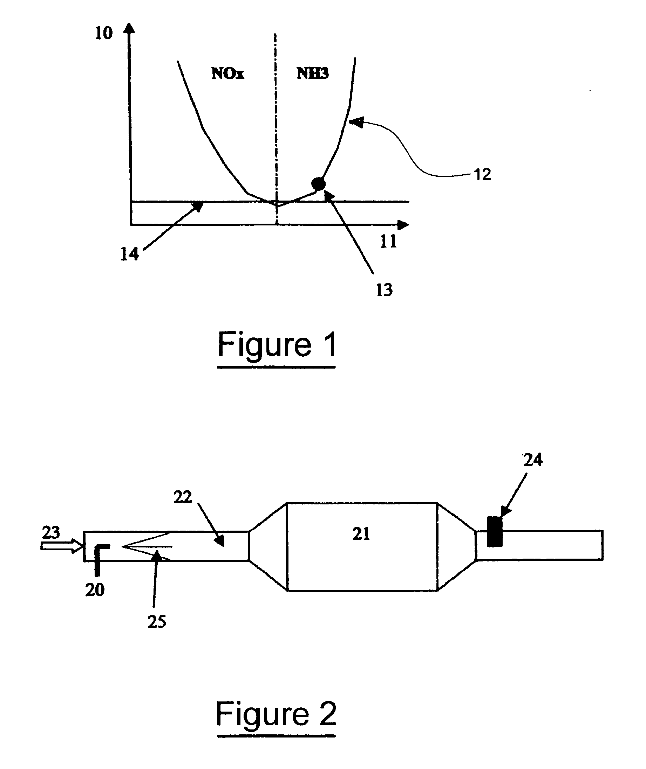

Ainsi, dans un véhicule muni d'un tel dispositif, dans le cas où une quantité trop importante d'ammoniac est dégagée en sortie du catalyseur, on met en oeuvre les séquences décrites à l'aide de la figure 1, qui représente la variation de la quantité de gaz émise 10 en fonction de la quantité 11 d'agent réducteur injecté dans la ligne d'échappement:
- Le capteur détecte la présence d'un gaz, oxyde d'azote ou ammoniac, en sortie du catalyseur, et émet un signal électrique 12 représentatif de la quantité de gaz émise.
- Le calculateur constate que la quantité mesurée, représentée par le point 13, est supérieure à une quantité prédéterminée 14. Or, à partir de cette quantité 13, qui est une valeur absolue, le calculateur n'est pas en mesure de déterminer s'il s'agit d'une quantité d'oxydes d'azote, qui correspondrait à la partie gauche de la courbe 12, ou une quantité d'ammoniac, comme représenté sur la figure 1 par le point 13.
- Le calculateur suppose que le gaz émis est un oxyde d'azote, et conclut donc qu'il est nécessaire d'augmenter la quantité d'agent réducteur injectée dans le système.
- En réponse à cette augmentation d'injection, la quantité de gaz mesurée par le capteur augmente, ce qui montre que la supposition sur la nature du gaz était incorrecte, puisque si elle avait été correcte, le surplus d'oxyde d'azote aurait été réduit grâce à l'ammoniac injecté de manière plus importante.
- Au vu de cette erreur, le calculateur conclut que le gaz émis est de l'ammoniac, et il commande une diminution de l'injection, afin d'atteindre le niveau prédéterminé.

Cette description des différentes étapes effectuées dans le véhicule fait apparaître un certain nombre d'inconvénients relativement gênants dans ce système :
- il est nécessaire d'intervenir sur la consigne de l'injection pour connaître le type de gaz émis,
- même si l'injection est correctement réglée à l'issue du déroulement des différentes séquences, une quantité relativement importante d'ammoniac est émise pendant le processus de réglage, ce qui pose des problèmes en termes d'environnement et de confort utilisateur,
- la mise en oeuvre de la détection de dégagement non souhaité de NH3 est relativement lente.

L'invention vise à remédier, au moins en partie, à ces inconvénients, en proposant un procédé de gestion de l'injection d'urée permettant de détecter la nature du gaz émis en sortie sans qu'il soit nécessaire d'intervenir sur l'injection d'agent réducteur, et permettant ainsi de n'agir sur cette injection que pour corriger les dérives.

De manière plus précise, l'invention concerne un procédé d'injection d'agent réducteur dans une ligne d'échappement d'un moteur, l'agent réducteur étant destiné à être utilisé pour réduire chimiquement, au cours d'une réaction de réduction catalytique sélective, dite SCR, des oxydes d'azote émis par le moteur, l'injection étant effectuée en amont d'un catalyseur dans lequel a lieu la réaction, l'agent réducteur contenant de l'ammoniac ou se transformant en ammoniac au cours d'une réaction chimique.

On a constaté que le signal électrique de sortie d'un capteur sensible à plusieurs gaz, par exemple sensible aux oxydes d'azote et à l'ammoniac, présente des variations différentes en fonction de la nature du gaz détecté.

En conséquence, l'invention part de cette constatation en proposant un procédé caractérisé en ce qu'il comporte les étapes suivantes :
- on injecte une quantité d'agent réducteur, dite quantité à injecter, dans la ligne d'échappement du moteur,
- on effectue une mesure des émissions de gaz en sortie du catalyseur SCR, en utilisant un capteur sensible aux oxydes d'azote et à l'ammoniac,
- on évalue la stabilité du signal électrique de sortie du capteur sur une période temporelle prédéterminée,
- on détermine, en fonction de cette stabilité, la nature du gaz présent en sortie du catalyseur à savoir que lorsque le signal est stable, on détermine que le gaz détecté est un oxyde d'azote, et que, lorsque le signal présente des variations sous forme d'oscillations, on determine que le gaz détecté est de l'ammoniac,
- en fonction de la nature du gaz présent en sortie du catalyseur, on commande une modification de la quantité d'agent réducteur à injecter.

La période prédéterminée sur laquelle on évalue la stabilité du signal représente, par exemple, une dizaine de secondes. L'analyse du signal est, dans les faits, effectuée en permanence sur une période glissante égale à cette période prédéterminée.

En effet, la période doit être choisie de façon à assurer un compromis entre :
- une période suffisamment longue pour permettre une détection correcte des variations du signal, et
- une période suffisamment courte pour garantir une détection rapide d'un éventuel dégagement d'ammoniac.

Dans une réalisation, cette période prédéterminée, sur laquelle on évalue la stabilité du signal, commence lors de la première injection d'urée, ou lors d'une modification de la quantité d'urée à injecter.

Le capteur utilisé pour effectuer les mesures en sortie du catalyseur est, de préférence, sensible uniquement aux oxydes d'azote et à l'ammoniac. De cette façon, les mesures ne sont pas faussées par la détection d'autres gaz tels que l'azote ou l'oxygène.

Les études effectuées sur les signaux électriques de sortie de capteur de gaz pour différents gaz ont permis de mettre en évidence les correspondances entre la stabilité du signal et ces gaz.

Ainsi, dans une réalisation, le procédé comprend l'étape, pour déterminer le type de gaz présent en sortie du catalyseur, de comparer la stabilité du signal avec des données de référence, enregistrées dans une mémoire d'un calculateur destiné à mettre en oeuvre le procédé. Ces données de références sont, par exemple, déterminées au préalable à partir d'un ensemble de tests effectués sur différents gaz.

Toutefois, dans le cas présent, seule la détection des oxydes d'azote et de l'ammoniac nous intéresse, et en conséquence il n'est pas nécessaire de faire appel à un nombre de données trop important.

En conséquence, dans certains modes de réalisation préférés du procédé :
- lorsque le signal est stable, ou sensiblement stable, on détermine que le gaz détecté est un oxyde d'azote, et dans ce cas, on commande une augmentation de la quantité d'agent réducteur à injecter.
- lorsque le signal présente des variations, notamment des oscillations, on détermine que le gaz détecté est de l'ammoniac, et dans ce cas on commande une diminution de la quantité d'agent réducteur à injecter.

Un signal stable, ou sensiblement stable, ne présente pas, ou peu, de variations au cours du temps. De manière plus précise, un tel signal peut être représenté par une fonction mathématique dont la dérivée première est nulle ou très proche de zéro.

Un signal présentant des variations, notamment des oscillations, peut être représenté par une fonction mathématique dont la dérivée première est, tour à tour, positive et négative.

La première étape du procédé consiste en l'injection d'une certaine quantité d'agent réducteur dans la ligne d'échappement. Cette quantité d'agent réducteur correspond à la quantité obtenue à l'issue de la modification commandée au cours de la mise en oeuvre précédente du procédé.

En ce qui concerne l'injection lors de la toute première mise en oeuvre, le procédé comprend, dans une réalisation avantageuse, une étape préliminaire consistant à déterminer une quantité d'agent réducteur initiale à injecter lors de la première mise en oeuvre du procédé.

Cette prédétermination est effectuée, par exemple, en tenant compte des paramètres du moteur, des émissions modélisés de NOx sortie moteur, de la température et du débit des gaz d'échappement et de l'ensemble des réactions chimiques mises en oeuvre au cours du processus de réduction catalytique sélective.

Dans une réalisation, le procédé comprend en outre l'étape, après avoir déterminé la nature du gaz présent en sortie du catalyseur, de déterminer la quantité émise de ce gaz, et d'utiliser cette quantité pour déterminer la modification d'injection d'agent réducteur à commander. Cette étape sera ultérieurement détaillée à l'aide de figures.

L'invention concerne également un système d'injection d'agent réducteur dans une ligne d'échappement d'un moteur, l'agent réducteur étant destiné à être utilisé pour réduire chimiquement, au cours d'une réaction de réduction catalytique sélective, dite SCR, des oxydes d'azote émis par le moteur, l'agent réducteur contenant de l'ammoniac ou se transformant en ammoniac au cours d'une réaction chimique, et le dispositif comportant les éléments suivants :
- un injecteur, situé en amont d'un catalyseur à réduction catalytique sélective,
- un capteur de gaz, installé en sortie de catalyseur, sensible aux oxydes d'azote et à l'ammoniac, et
- un calculateur électronique, comportant
   o des moyens pour évaluer la stabilité du signal électrique de sortie du capteur sur une période temporelle prédéterminée,
   o des moyens pour déterminer, à partir de cette stabilité, la nature du gaz dégagé en sortie du catalyseur, à savoir que lorsque le signal est stable, ils déterminent que le gaz détecté est un oxyde d'azote et que lorsque le signal présente des variations sous forme d'oscillations, ils déterminent que le gaz détecté est de l'ammoniac.
   o des moyens pour commander une modification de la quantité d'agent réducteur à injecter en fonction de la nature du gaz déterminée.

Dans une configuration avantageuse, le calculateur comprend, en outre, une mémoire destinée à enregistrer des données de référence, ainsi que des moyens de comparaison de la stabilité de signal électrique issu d'un capteur avec les données de référence enregistrées dans la mémoire.

D'autres avantages et caractéristiques de l'invention apparaîtront avec la description de certains de ses modes de réalisation, cette description étant effectuée à titre non limitatif à l'aide des figures sur lesquelles :
- la figure 1, déjà décrite, montre un signal de sortie d'un capteur de gaz NOx/NH3, utilisé dans les dispositifs d'injection connus dans l'état de la technique.
- la figure 2 montre une ligne d'échappement de moteur d'un véhicule automobile, dans laquelle est installé un système d'injection conforme à l'invention,
- les figures 3a et 3b montrent des signaux de sortie d'un capteur de gaz NOx/NH3, tels qu'exploités dans un dispositif conforme à l'invention.

Un dispositif selon l'invention comprend, ainsi que montré sur la figure 2, un injecteur 20, situé en amont d'un catalyseur SCR 21, siège des réactions de réduction catalytique sélective permettant le traitement des oxydes d'azote échappé du moteur.

Cet injecteur 20 est utilisé pour injecter un agent réducteur dans une ligne d'échappement 22 d'un moteur de véhicule automobile, notamment un véhicule de type Diesel.

On précise ici que la notion d'amont/aval doit être comprise en fonction du sens de déplacement du flux 23 des gaz d'échappement dans la ligne d'échappement 22.

Le dispositif comprend également un capteur NOx/NH3 24, capable de détecter et de mesurer les dégagements d'oxydes d'azote et d'ammoniac en sortie du catalyseur SCR 21.

Les signaux électriques issus du capteur 24 sont transmis à un calculateur électronique, non représenté ici.

Lors de la mise en oeuvre d'une réduction catalytique sélective dans un dispositif tel que celui représenté sur cette figure 2, deux cas de figures sont envisageables.

Dans un premier cas de figure, la quantité d'agent réducteur injectée 25 n'est pas suffisante pour réduire l'ensemble des oxydes d'azote contenus dans le flux 23 de gaz d'échappement. En conséquence, certains oxydes d'azote sont émis hors du catalyseur 21, sans avoir été réduits chimiquement, et sont donc détectés par le capteur 24.

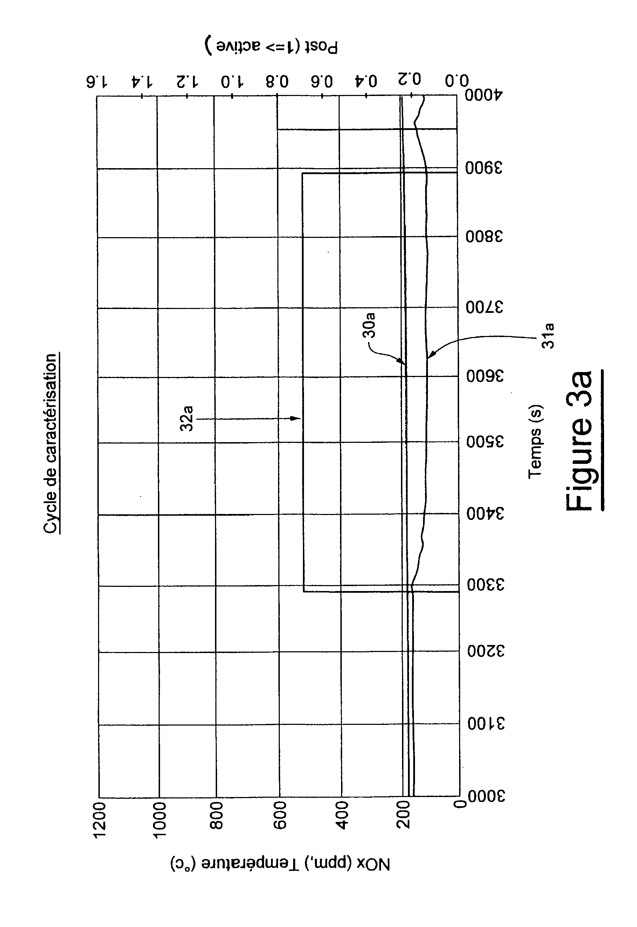

Dans ce cas, le signal électrique de sortie du capteur 24 est un signal stable, comme représenté par la courbe 31a sur la figure 3a, ultérieurement décrite.

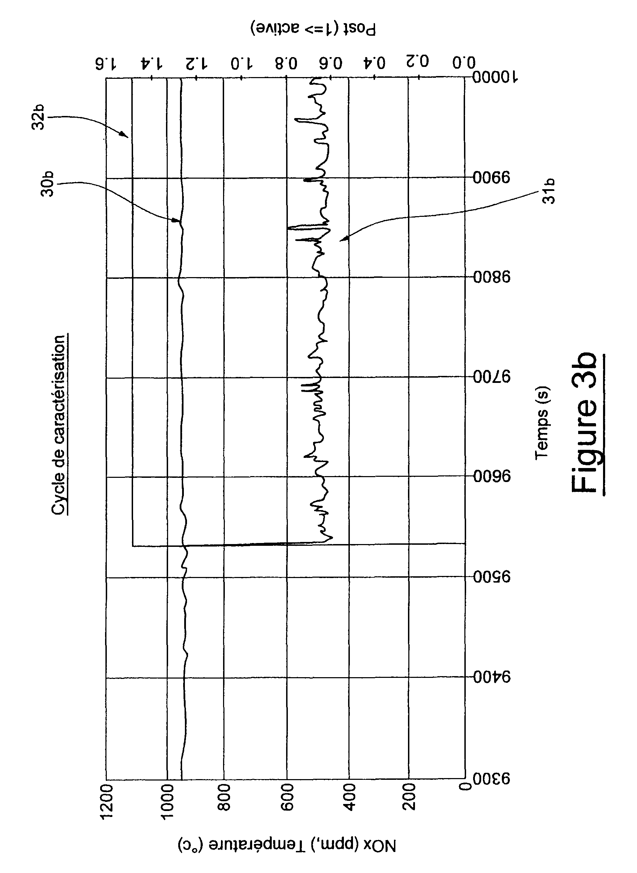

Dans un deuxième cas de figure, la quantité d'agent réducteur injecté est supérieure à la quantité nécessaire pour réduire l'ensemble des oxydes d'azote. Dans ce cas, l'ammoniac issu de cet agent réducteur n'est pas consommé lors des réactions de réduction dans le catalyseur 21, et il est donc dégagé en sortie de ce catalyseur, et détecté par le capteur 24. Le signal électrique de sortie de ce capteur est, dans ce cas, un signal oscillant, tel que représenté par la courbe 31 b sur la figure 3b.

Les graphes des figures 3a et 3b vont maintenant être décrits en détail, afin d'illustrer la mise en oeuvre d'un procédé conforme à l'invention dans les deux cas de figure précédemment mentionnés.

La figure 3a (respectivement 3b) montre l'évolution de différentes grandeurs en fonction du temps :
- la courbe 30a (resp. 30b), représente l'évolution de la quantité d'oxydes d'azote à l'entrée du catalyseur SCR, mesurée par un capteur situé en sortie du moteur,
- la courbe 31 a (resp. 31 b) représente l'évolution de la quantité de gaz mesurée par le capteur de gaz en sortie du catalyseur SCR, et
- la courbe 32a (resp. 32b) représente l'évolution du rapport entre la quantité d'ammoniac et la quantité d'oxydes d'azote à l'entrée du catalyseur SCR, noté rapport NH3/NOx.

Les quantités de gaz sont exprimés en parties par million (ppm), et le temps est exprimé en secondes (s).

Pour la mise en oeuvre d'un procédé selon l'invention, on injecte tout d'abord un agent réducteur à l'instant t = 3300 secondes. (figure 3a).

Avant cette injection, aucune réaction de réduction n'est possible ; les courbes 30a et 31a sont donc quasiment confondues, et leur évolution est stable.

A l'instant t = 3300 secondes, on injecte donc un agent réducteur, en quantité telle que le rapport NH3/NOx soit égal à 0.7. Or, pour que tous les oxydes d'azote soient correctement réduits, il est nécessaire que ce rapport soit proche de 1.

En conséquence, dans cette situation, une partie seulement des oxydes d'azote est réduite par l'ammoniac, ce qui se traduit sur la courbe 31 a par une légère diminution du signal avant une stabilisation à un niveau inférieur à celui de la courbe 30a, mais non nul.

En outre, aucune molécule d'ammoniac n'est dégagée en sortie du catalyseur puisque, l'ammoniac étant le réactif limitant de la réaction de réduction, il est consommé en intégralité.

Nous allons maintenant étudier le cas, illustré sur la figure 3b, où la quantité d'ammoniac injectée est supérieure à la quantité nécessaire pour la réduction.

Dans ce cas, on effectue une injection d'agent réducteur à l'instant t = 9520 secondes. Comme dans le cas précédent, avant cette injection, aucune réaction de réduction n'est possible ; les courbes 30b et 31 b sont donc quasiment confondues, et leur évolution est stable.

On injecte alors une quantité d'agent réducteur telle que le rapport NH3/NOx est égal à 1.5, ce qui signifie que l'ammoniac est en excès par rapport aux oxydes d'azote.

En conséquence, le gaz détecté par le capteur installé en sortie du catalyseur est de l'ammoniac, et la courbe 31 b représente donc, à compter de cet instant, la quantité d'ammoniac émise en sortie du catalyseur. Cette quantité d'ammoniac oscille autour d'une valeur moyenne, environ égale à 75 ppm dans l'exemple décrit ici.

Ainsi qu'expliqué précédemment, dans un dispositif conforme à l'invention, les signaux de sortie du capteur sont transmis à un calculateur électronique, afin d'être exploités en vue d'une adaptation de l'injection d'urée.

Or, on constate, au vu de ces figures, que la forme du signal de sortie du capteur est différente selon que le gaz issu du catalyseur 21 et détecté par le capteur 24 est un oxyde d'azote (figure 3a), ou de l'ammoniac (figure 3b). Cette forme est la représentation visuelle du caractère stable ou instable, c'est à dire avec ou sans variations, du signal représenté.

En conséquence, un calculateur électronique recevant ce signal est capable de déterminer directement la nature du gaz émis. Partant de cette détermination, il peut alors émettre un signal de commande en direction de l'injecteur, afin de faire varier l'injection d'agent réducteur de la façon suivante :
- si le signal reçu du capteur est un signal stable, cela signifie que des oxydes d'azote sont émis du catalyseur sans avoir été réduits ; il est donc nécessaire d'augmenter la quantité d'agent réducteur injecté, afin de garantir un taux de réduction correct des oxydes d'azote échappés du moteur ;
- si, au contraire, le signal reçu du capteur est un signal oscillant, cela signifie que l'ammoniac est en excès, et qu'il est donc nécessaire de diminuer l'injection d'agent réducteur afin de limiter tout dégagement non souhaitable d'ammoniac dans l'atmosphère.

En outre, il peut être utile, afin d'adapter de manière précise l'injection d'urée, de déterminer non seulement la nature du gaz émis, mais également la quantité émise.

Dans le cas où le gaz émis est un oxyde d'azote, la quantité est relativement aisée à déterminée, puisque le signal électrique, représentatif de l'émission, est stable.

En revanche, lorsque le gaz émis est de l'ammoniac, le signal est oscillant, comme précédemment décrit. Dans ce cas, le calculateur électronique détermine l'amplitude et la fréquence des oscillations du signal de sortie du capteur NOX/NH3, afin de calculer, à partir de ces éléments, la quantité d'ammoniac effectivement désorbée du catalyseur.

Le signal de commande émis en direction de l'injecteur tient compte de ces quantités, pour indiquer si la modification à appliquer, qu'elle soit augmentation ou diminution, doit être faible ou importante.

L'invention ainsi définie de mettre en place une stratégie d'injection d'urée rendant possible :
- une injection d'agent réducteur calculée au plus juste, c'est à dire permettant d'atteindre une conversion optimale des oxydes d'azote tout en évitant les dégagements non voulus d'ammoniac, et
- une détection rapide de toute dérive (émission d'oxyde d'azote non réduits, ou émission d'ammoniac en excès).

La rapidité de la détection est un aspect primordial dans l'efficacité des systèmes de traitement des oxydes d'azote. En effet, pour pouvoir effectuer une injection d'agent réducteur dans des conditions favorables à une bonne réaction chimique, il est nécessaire que les conditions de température et de gaz soient stabilisées. Or, l'invention permet d'effectuer cette stabilisation en un temps très court, notamment puisqu'il n'est pas nécessaire d'intervenir plusieurs fois sur la consigne d'injection avant d'obtenir une injection correcte.

En outre, cette invention est avantageuse en ce qu'elle n'engendre pas de surcoût lors de sa mise en oeuvre dans un véhicule automobile, puisqu'elle utilise des éléments déjà présents dans les véhicules, tels que l'injecteur de réducteur, le catalyseur SCR, ou le capteur NOx/NH3.

## Revendications

1. Procédé d'injection d'agent réducteur dans une ligne d'échappement (22) d'un moteur, l'agent réducteur étant destiné à être utilisé pour réduire chimiquement, au cours d'une réaction de réduction catalytique sélective, dite SCR, des oxydes d'azote émis par le moteur, l'injection (25) étant effectuée en amont d'un catalyseur (21) dans lequel a lieu la réaction, l'agent réducteur contenant de l'ammoniac ou se transformant en ammoniac au cours d'une réaction chimique, et le procédé comporte les étapes suivantes :
- on injecte une quantité d'agent réducteur (25), dite quantité à injecter, dans la ligne d'échappement (22) du moteur,
- on effectue une mesure des émissions de gaz en sortie du catalyseur SCR, en utilisant un capteur (24) sensible aux oxydes d'azote et à l'ammoniac,
- on évalue la stabilité du signal électrique de sortie du capteur (24) sur une période temporelle prédéterminée,
- on détermine, en fonction de cette stabilité, la nature du gaz présent en sortie du catalyseur (21),
- en fonction de la nature du gaz présent en sortie du catalyseur (21), on commande une modification de la quantité d'agent réducteur à injecter (25).
**caractérisé en ce que** lorsque le signal est stable, on détermine que le gaz détecté est un oxyde d'azote, et que, lorsque le signal présente des variations sous forme d'oscillations, on détermine que le gaz détecté est de l'ammoniac.

2. Procédé selon la revendication 1, **caractérisé en ce que** la période prédéterminée sur laquelle on évalue la stabilité du signal commence lors de la première injection d'urée, ou lors d'une modification de la quantité d'urée à injecter.

3. Procédé selon la revendication 1 ou 2, **caractérisé en ce qu'**il comprend l'étape, pour déterminer la nature du gaz présent en sortie du catalyseur (21), de comparer la stabilité du signal avec des données de référence, enregistrées dans une mémoire d'un calculateur destiné à mettre en oeuvre le procédé.

4. Procédé selon l'une des revendications précédentes, dans lequel, lorsque le gaz détecté en sortie du catalyseur (21) est un oxyde d'azote, on commande une augmentation de la quantité d'agent réducteur à injecter.

5. Procédé selon l'une des revendications 1 à 3, dans lequel, lorsque le gaz détecté en sortie du catalyseur (21) est de l'ammoniac, on commande une diminution de la quantité d'agent réducteur à injecter.

6. Procédé selon l'une des revendications précédentes, **caractérisé en ce qu'**il comprend l'étape préliminaire de déterminer une quantité d'agent réducteur initiale à injecter lors de la première mise en oeuvre du procédé.

7. Procédé selon l'une des revendications précédentes, **caractérisé en ce qu'**il comprend l'étape après avoir déterminé la nature du gaz présent en sortie du catalyseur, de déterminer la quantité de ce gaz, et d'utiliser cette quantité pour déterminer la modification d'injection d'agent réducteur à commander.

8. Système d'injection d'agent réducteur dans une ligne d'échappement (22) d'un moteur, l'agent réducteur étant destiné à être utilisé pour réduire chimiquement, au cours d'une réaction de réduction catalytique sélective, dite SCR, des oxydes d'azote émis par le moteur, l'agent réducteur contenant de l'ammoniac ou se transformant en ammoniac au cours d'une réaction chimique, et le dispositif comportant les éléments suivants :
- un injecteur (20), situé en amont d'un catalyseur à réduction catalytique sélective,
- un capteur de gaz (24), installé en sortie de catalyseur (21), sensible aux oxydes d'azote et à l'ammoniac, et
- un calculateur électronique, comportant
o des moyens pour évaluer la stabilité du signal électrique de sortie du capteur (24) sur une période temporelle prédéterminée,
o des moyens pour déterminer, à partir de cette stabilité, la nature du gaz dégagé en sortie du catalyseur (21), à savoir que lorsque le signal est stable, iles déterminent que le gaz détecté est un oxyde d'azote, et que, lorsque le signal présente des variations sous forme d'oscillations, ils déterminent que le gaz détecté est de l'ammoniac,
o des moyens pour commander une modification de la quantité d'agent réducteur à injecter en fonction de la nature du gaz déterminée.

9. Système selon la revendication précédente, **caractérisé en ce que** les moyens pour déterminer, à partir de la stabilité du signal, la nature du gaz dégagé en sortie du catalyseur (21), sont aptes à représenter le signal stable sous forme d'une fonction mathématique dont la dérivée première est nulle ou très proche de zéro, et à représenter le signal présentant des variations sous forme d'une fonction mathématique dont la dérivée première est tour à tour positive ou négative.

## Claims

1. Method for injecting a reducing agent into an exhaust line (22) of an engine, the reducing agent being intended to be used for chemically reducing, during a selective catalytic reduction reaction, referred to as SCR, nitrogen oxides emitted by the engine, the injection (25) being effected upstream of a catalyst (21) in which the reaction takes place, the reducing agent containing ammonia or transforming into ammonia during a chemical reaction, and the method comprises the following steps:
- a quantity of reducing agent (25), referred to as the quantity to be injected, is injected into the exhaust line (22) of the engine,
- a measurement is made of the gas emissions discharged from the SCR catalyst, using a sensor (24) sensitive to nitrogen oxides and ammonia,
- the stability of the electrical signal output from the sensor (24) is evaluated over a predetermined time period,
- the nature of the gas present at the discharge from the catalyst (21) is determined according to this stability,
- depending on the nature of the gas present at the discharge from the catalyst (21), a modification to the quantity of reducing agent to be injected (25) is demanded,
**characterised in that**, when the signal is stable, it is determined that the gas detected is a nitrogen oxide and, when the signal has variations in the form of oscillations, it is determined that the gas detected is ammonia.

2. Method according to claim 1, **characterised in that** the predetermined period over which the stability of the signal is evaluated commences at the first injection of urea, or when the quantity of urea to be injected is modified.

3. Method according to claim 1 or 2, **characterised in that** it comprises the step, for determining the nature of the gas present at the discharge from the catalyst (21), of comparing the stability of the signal with reference data recorded in a memory of a computer intended to implement the method.

4. Method according to one of the preceding claims, in which, when the gas detected at the discharge from the catalyst (21) is a nitrogen oxide, an increase in the quantity of reducing agent to be injected is demanded.

5. Method according to one of claims 1 to 3, in which, when the gas detected at the discharge from the catalyst (21) is ammonia, a reduction in the quantity of reducing agent to be injected is demanded.

6. Method according to one of the preceding claims, **characterised in that** it comprises the preliminary step of determining a quantity of initial reducing agent to be injected when the method is first implemented.

7. Method according to one of the preceding claims, **characterised in that** it comprises the step, after having determined the nature of the gas present at the discharge from the catalyst, of determining the quantity of this gas and using this quantity for determining the modification to the injection of reducing agent to be demanded.

8. System for injecting reducing agent into an exhaust line (22) of an engine, the reducing agent being intended to be used for chemically reducing, during a selective catalytic reduction reaction, referred to as SCR, nitrogen oxides emitted by the engine, the reducing agent containing ammonia or transforming into ammonia during a chemical reaction, and the device comprising the following elements:
- an injector (20) situated upstream of a selective catalytic reduction catalyst,
- a gas sensor (24) installed at the discharge from the catalyst (21), sensitive to nitrogen oxides and ammonia, and
- an electronic computer, comprising
o means for evaluating the stability of the electrical signal output from the sensor (24) over a predetermined time period,
o means for determining, from this stability, the nature of the gas given off at the discharge from the catalyst (21), namely that, when the signal is stable, they determine that the gas detected is a nitrogen oxide and, when the signal exhibits variations in the form of oscillations, they determine that the gas detected is ammonia,
o means for demanding a modification to the quantity of reducing agent to be injected according to the nature of the gas determined.

9. System according to the preceding claim, **characterised in that** the means for determining, from the stability of the signal, the nature of the gas given off at the discharge from the catalyst (21), are able to represent the stable signal in the form of a mathematical function the first derivative of which is zero or very close to zero, and to represent the signal exhibiting variations in the form of a mathematical function the first derivative of which is in turns positive or negative.

## Patentansprüche

1. Verfahren zum Zuführen eines Reduktionsmittels in eine Auspuffanlage (22) eines Motors, wobei das Reduktionsmittel dazu bestimmt ist, dazu verwendet zu werden, um im Laufe einer Reaktion zur selektiven katalytischen Reduktion, die SCR genannt wird, vom Motor ausgestoßene Stickstoffoxide chemisch zu reduzieren, und die Zuführung (25) oberhalb eines Katalysators (21) erfolgt, in dem die Reaktion stattfindet, und das Reduktionsmittel Ammoniak enthält, oder sich im Laufe einer chemischen Reaktion in Ammoniak verwandelt, und das Verfahren die folgenden Schritte umfasst:
- man führt der Auspuffanlage (22) des Motors eine Menge an Reduktionsmittel (25) zu, die zuzuführende Menge genannt wird,
- man führt eine Messung der Gasemissionen am Ausgang des SCR Katalysators durch, und verwendet dabei einen Sensor (24) der auf Stickstoff und Ammoniak reagiert,
- man bewertet über einen vorbestimmten Zeitraum hinweg die Stabilität des elektrischen Ausgangssignals des Sensors (24),
- man bestimmt in Abhängigkeit von dieser Stabilität die Beschaffenheit des Gases am Ausgang des Katalysators (21),
- man steuert je nach Beschaffenheit des Gases am Ausgang des Katalysators (21) eine Änderung der zuzuführenden Menge an Reduktionsmittel (25) an,
**dadurch gekennzeichnet, dass**, wenn das Signal stabil ist, man bestimmt, dass das erfasste Gas ein Stickstoffoxid ist, und dass, wenn das Signal Variationen in Form von Schwingungen aufweist, man bestimmt, dass das erfasste Gas Ammoniak ist.

2. Verfahren nach Anspruch 1, **dadurch gekennzeichnet, dass** der vorbestimmte Zeitraum, in dem man die Stabilität des Signals bewertet, bei der ersten Zuführung von Harnstoff, oder bei einer Änderung der zuzuführenden Harnstoffmenge beginnt.

3. Verfahren nach Anspruch 1 oder 2, **dadurch gekennzeichnet, dass** es den Schritt umfasst, die Beschaffenheit des Gases am Ausgang des Katalysators (21) zu bestimmen, die Stabilität des Signals mit den Bezugsdaten zu vergleichen, die in einem Speicher eines Rechners abgelegt sind, der dazu bestimmt ist, das Verfahren anzuwenden.

4. Verfahren nach einem der vorherigen Ansprüche, bei dem, wenn das am Ausgang des Katalysators (21) erfasste Gas ein Stickstoffoxid ist, man eine Erhöhung der zuzuführenden Menge an Reduktionsmittel ansteuert.

5. Verfahren nach einem der Ansprüche 1 bis 3, bei dem, wenn das am Ausgang des Katalysators (21) erfasste Gas Ammoniak ist, man eine Verringerung der zuzuführenden Menge an Reduktionsmittel ansteuert.

6. Verfahren nach einem der vorherigen Ansprüche, **dadurch gekennzeichnet, dass** es den vorbereitenden Schritt umfasst, eine ursprüngliche Menge an Reduktionsmittel zu bestimmen, die bei der ersten Umsetzung des Verfahrens zuzuführen ist.

7. Verfahren nach einem der vorherigen Ansprüche, **dadurch gekennzeichnet, dass** es den Schritt nach der Bestimmung der Beschaffenheit des Gases am Ausgang des Katalysators umfasst, der darin besteht, die Menge dieses Gases zu bestimmen, und diese Menge dafür zu verwenden, um die Änderung der Reduktionsmittelzuführung zu bestimmen, die es anzusteuern gilt.

8. System zum Zuführen eines Reduktionsmittels in eine Auspuffanlage (22) eines Motors, wobei das Reduktionsmittel dazu bestimmt ist, dazu verwendet zu werden, um im Laufe einer Reaktion zur selektiven katalytischen Reduktion, die SCR genannt wird, die vom Motor ausgestoßenen Stickstoffoxide chemisch zu reduzieren, und das Reduktionsmittel Ammoniak enthält, oder sich im Laufe einer chemischen Reaktion in Ammoniak verwandelt, und die Vorrichtung die folgenden Elemente umfasst:
- eine Einspritzanlage (20), die oberhalb eines Katalysators zur selektiven katalytischen Reduktion angebracht ist,
- einen Gassensor (24), der am Ausgang des Katalysators (21) angebracht ist, und auf Stickstoff und Ammoniak reagiert, und
- einen elektronischen Rechner umfassend
o Vorrichtungen zur Bewertung der Stabilität des elektrischen Ausgangssignals des Sensors (24) während eines vorbestimmten Zeitraums,
o Vorrichtungen zur Bestimmung der Beschaffenheit des am Ausgang des Katalysators (21) ausgestoßenen Gases, ausgehend von dieser Stabilität, in dem Sinne, dass sie, wenn das Signal stabil ist, bestimmen, dass das erfasste Gas ein Stickstoffoxid ist, und dass sie, wenn das Signal Variationen in Form von Schwingungen aufweist, bestimmen, dass das erfasste Gas Ammoniak ist,
o Vorrichtungen zum Ansteuern einer Änderung der Menge des zuzuführenden Reduktionsmittels in Abhängigkeit von der bestimmten Beschaffenheit des Gases.

9. System nach dem vorherigen Anspruch, **dadurch gekennzeichnet, dass** die Vorrichtungen zum Bestimmen der Beschaffenheit des aus dem Katalysator (21) ausgestoßenen Gases ausgehend von der Stabilität des Signals geeignet sind, das stabile Signal in Form einer mathematischen Funktion darzustellen, deren erste Ableitung Null oder nahe Null ist, und das Signal, das Variationen aufweist in Form einer mathematischen Funktion darzustellen, deren erste Ableitung abwechselnd positiv oder negativ ist.
